(19) Europäisches Patentamt

European Patent Office

Office européen des brevets

(11) Numéro de publication : **0 336 843 B1**

# (12) FASCICULE DE BREVET EUROPEEN

(45) Date de publication du fascicule du brevet :
25.09.91 Bulletin 91/39

(51) Int. Cl.$^5$ : **F16D 23/14**

(21) Numéro de dépôt : **89400939.8**

(22) Date de dépôt : **05.04.89**

(54) **Tube-guide à étanchéité intégrée pour butée de débrayage de boite de vitesses de véhicule automobile.**

(30) Priorité : **05.04.88 FR 8804448**

(43) Date de publication de la demande :
**11.10.89 Bulletin 89/41**

(45) Mention de la délivrance du brevet :
**25.09.91 Bulletin 91/39**

(84) Etats contractants désignés :
**DE ES GB IT**

(56) Documents cités :
**DE-C- 975 377**
**FR-A- 2 305 639**
**FR-A- 2 618 864**
**GB-A- 2 040 384**

(73) Titulaire : **PROCAL, Société anonyme dite**
**Les Franchises**
**F-52200 Langres (FR)**

(72) Inventeur : **Bertin, Gérard**
**Résidence Henri IV**
**F-52200 Langres (FR)**

(74) Mandataire : **Nony, Michel et al**
**Cabinet NONY & CIE, 29, rue Cambacérès**
**F-75008 Paris (FR)**

EP 0 336 843 B1

Jouve, 18, rue Saint-Denis, 75001 PARIS

## Description

La présente invention est relative à un tube-guide à étanchéité intégrée pour butée de débrayage de boîte de vitesses de véhicule automobile, selon le préambule de la revendication.

D'une manière générale, les butées de débrayage coulissent sur un manchon tubulaire engagé axialement autour de l'arbre d'entrée de la boîte de vitesses, emmanché à force dans un alésage du carter de celle-ci, une bague d'étanchéité, généralement du type à lèvre, étant interposée entre le carter et l'arbre d'entrée.

Dans les réalisations traditionnelles, la bague d'étanchéité est une pièce montée séparément du manchon formant tube-guide. Cette solution présente l'inconvénient que, lorsqu'il devient nécessaire de changer la bague d'étanchéité, il faut procéder au démontage complet de la boîte.

Pour éviter cet inconvénient, on utilise couramment des tubes-guides dans lesquels la bague d'étanchéité est montée à l'intérieur d'un logement cylindrique défini par une portée d'extrémité tubulaire, de plus grand diamètre que le manchon tubulaire formant tube-guide. La portée d'extrémité tubulaire est reliée d'un seul tenant au manchon par une portée radiale sur laquelle est solidarisée, notamment par soudure, une platine formant bride de fixation sur la face extérieure de la paroi du carter de la boîte de vitesses.

Avec cette solution, si la bague d'étanchéité est défaillante elle peut être démontée en séparant la boîte du moteur, sans démontage de la boîte. Le tube-guide et la bague étant accessibles de l'extérieur, il suffit de démonter les organes de fixation de la bride solidaire du tube-guide de la face extérieur de la paroi du carter de boîte, puis d'extraire le tube-guide et la bague d'étanchéité.

Cette solution exige la fabrication séparée d'une platine destinée à former la bride de fixation, puis, la soudure de la platine sur la portée radiale du tube-guide entre le manchon tubulaire et la portée tubulaire frontale de réception de la bague d'étanchéité.

La société déposante a décrit dans FR-A-2618864 un tube-guide dans lequel la platine formant bride de fixation est constituée par une portée radiale d'un seul tenant avec le manchon tubulaire.

Dans ce tube-guide la portée radiale constituant la platine formant bride de fixation prolonge d'un seul tenant une portée tubulaire coaxiale extérieurement à la portée tubulaire de réception de la bague d'étanchéité et reliée à son extrémité frontale.

Cette portée tubulaire extérieure, en saillie vers l'avant par rapport à la portée radiale constituant la platine formant bride de fixation, assure notamment le centrage du tube-guide lors de son engagement dans l'alésage du carter de boîte de vitesses.

La réalisation d'un tel tube-guide d'un seul tenant, notamment par emboutissage d'une tôle, telle qu'une tôle d'acier, est néanmoins relativement complexe.

La présente invention se propose de réaliser un tube-guide d'une fabrication plus simple et économique.

Le tube-guide selon l'invention, dans lequel la platine formant bride de fixation est constituée par une portée radiale d'un seul tenant avec le manchon tubulaire, se caractérise par le fait que ladite portée radiale prolonge d'un seul tenant, à son extrémité frontale, la portée tubulaire de réception de la bague d'étanchéité, ladite bague d'étanchéité comportant une armature ayant une portée tubulaire extérieure avec un prolongement tubulaire d'étendue axiale plus grande que ladite portée tubulaire de réception de ladite bague d'étanchéité.

Ainsi, selon l'invention, lorsque la bague d'étanchéité est engagée dans son logement cylindrique dans le tube-guide, défini par la portée tubulaire de celui-ci, elle présente un prolongement tubulaire s'étendant axialement au-delà de la portée radiale d'extrémité frontale du tube-guide, ce prolongement tubulaire servant au centrage du tube-guide dans l'alésage du carter de la boîte de vitesses.

Dans le but de mieux faire comprendre l'invention on va maintenant en décrire, un exemple de réalisation nullement limitatif, en se référant au dessin annexé dans lequel :

— la figure 1 est une vue en coupe longitudinale d'un tube-guide à étanchéité intégrée selon l'invention,

— la figure 2 illustre le tube-guide selon l'invention en position montée d'utilisation.

Le tube-guide selon l'invention comprend une partie en forme de manchon tubulaire 1 raccordée à son extrémité frontale par un arrondi 2 à une portée tronconique 3 s'ouvrant vers l'avant (mais qui pourrait être une portée radiale), reliée elle-même par un arrondi 4 à une portée tubulaire cylindrique 5 définissant un logement cylindrique 6 pour la mise en place d'une bague d'étanchéité à lèvre désignée globalement par 7.

La portée tubulaire 5 est raccordée à son extrémité frontale par un arrondi 8 à une portée radiale 9, cette portée radiale 9 étant munie d'orifices 10, de préférence réalisés dans des oreilles réparties à la périphérie de la portée 9, pour la fixation sur la face extérieure du carter de la boîte de vitesses, comme cela sera expliqué plus loin.

La bague d'étanchéité 7 peut être de tout type approprié.

Dans l'exemple illustré, il s'agit d'une bague à lèvre comportant une garniture d'étanchéité en élastomère 11 comportant une arête d'étanchéité principale 12 et une lèvre secondaire 13, l'appui d'étanchéité de l'arête 12 étant obtenu par un ressort-jarretière 14. Dans l'exemple illustré, la garniture 11 est réalisée à l'extrémité de la branche radiale 15 d'une armature métallique comportant deux portées tubulaires cylindriques concentriques 16, 17, jointives dans l'exemple illustré.

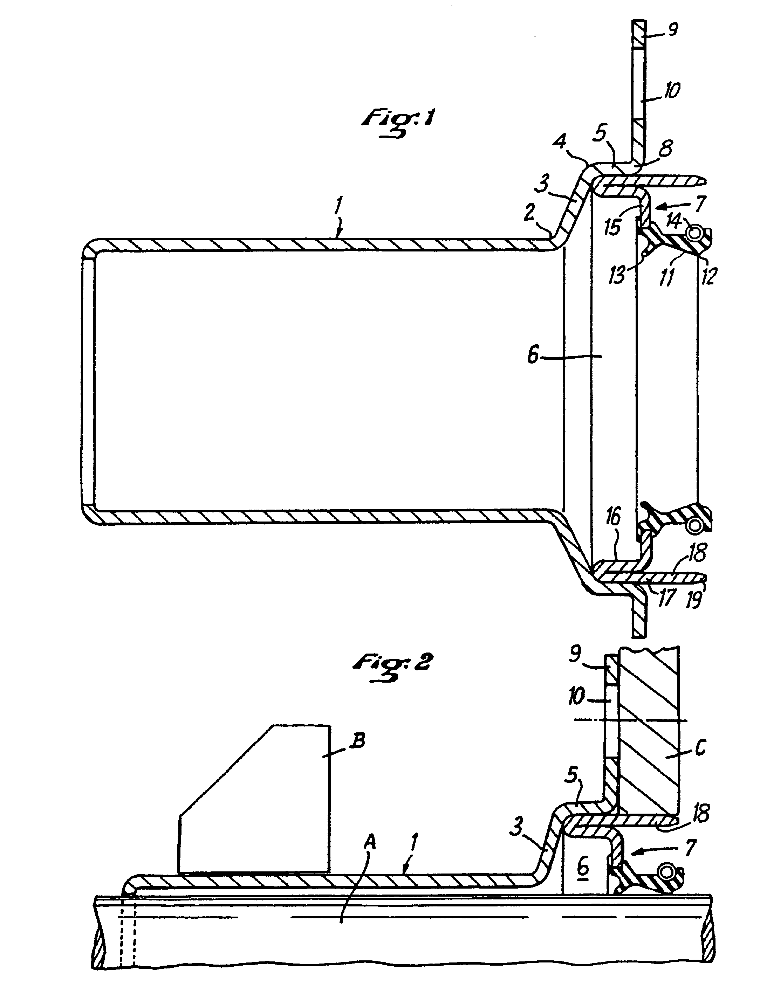

La portée 17 constitue la portée de diamètre extérieur de la bague et comporte, selon l'invention, un prolongement axial 18 qui, dans la position montée de la bague, s'étend au-delà de la portée radiale 9 du tube-guide. Ce prolongement tubulaire 18, qui peut être avantageusement muni d'un chanfrein 19 à son extrémité, facilite le centrage dans l'alésage du carter de la boîte de vitesses, comme on le voit sur la figure 2.

Cette figure 2 illustre le tube-guide selon l'invention en position d'utilisation.

Le tube-guide est engagé par sa partie en forme de manchon tubulaire 1 sur l'arbre d'entrée A d'une boîte de vitesses dont on voit le carter en C. Une butée de débrayage B coulisse sur la paroi extérieure du manchon tubulaire 1.

La bague d'étanchéité à lèvre 7 engagée à force par sa portée extérieure 17 dans le logement 6 défini par la portée tubulaire 5 du tube-guide comporte, comme indiqué plus haut, un prolongement tubulaire 18 qui contribue au montage et au centrage du tube-guide dans l'alésage du carter C de la boîte de vitesses. Une fois le tube-guide muni de sa bague d'étanchéité engagé dans la position illustrée à la figure 2, l'ensemble est fixé sur la paroi extérieure du carter C par des vis (non représentées), s'engageant dans des orifices 10 de la paroi radiale 9 du tube-guide.

Le tube-guide selon l'invention ainsi que l'armature de la bague d'étanchéité peuvent être réalisés chacun d'un seul tenant par emboutissage notamment d'une tôle d'acier, par exemple d'une épaisseur de 1 mm.

## Revendications

1. Tube-guide à étanchéité intégrée pour butée de débrayage de boîte de vitesses de véhicule automobile, comportant un manchon tubulaire (1) apte à être engagé axialement autour d'un arbre d'entrée (A) d'une boîte de vitesses, une portée d'extrémité tubulaire (5) apte à former un logement pour une bague d'étanchéité (7), de plus grand diamètre que le manchon tubulaire (1), reliée d'un seul tenant audit manchon, et une platine pour la fixation du tube-guide sur la face extérieure de la paroi du carter (C) de boîte de vitesses, ladite platine étant constituée par une portée radiale (9) d'un seul tenant avec le manchon tubulaire (1), caractérisé par le fait que ladite portée radiale (9) prolonge d'un seul tenant, à son extrémité frontale, la portée tubulaire (5) de réception de la bague d'étanchéité (7), ladite bague d'étanchéité comportant une armature ayant une portée tubulaire extérieure (17) avec un prolongement tubulaire (18) d'étendue axiale plus grande que ladite portée tubulaire (5) de réception de ladite bague d'étanchéité (7), s'étendant axialement au-delà de la portée radiale d'extrémité frontale (9) du tube-guide, le prolongement tubulaire (18) servant au centrage du tube-guide dans l'alésage du carter (C) de la boîte de vitesses.

## Patentansprüche

1. Führungshülse mit integrierter Dichtung für das Kupplungsausrücklager von Kraftfahrzeuggetrieben, mit einem eine Eingangswelle (A) eines Getriebes axial umgreifenden Rohrstutzen (1), einem mit diesem einstückig verbundenen, eine Aufnahme für einen Dichtungsring (7) bildenden Rohrförmigen Endabschnitt (5), der einen größeren Durchmesser hat als der Rohrstutzen (1), und einer Platte zur Befestigung der Führungshülse an der Außenwand des Getriebegehäuses (C), wobei die Platte von einem mit dem Rohrstutzen (1) einstückigen radialen Abschnitt (9) gebildet ist, dadurch gekennzeichnet, daß der radiale Abschnitt (9) an seinem vorderen Ende einstückig in den rohrförmigen Abschnitt (5) zur Aufnahme des Dichtungsrings (7) übergeht, wobei der Dichtungsring mit einer Bewehrung versehen ist, die einen rohrförmigen äußeren Abschnitt (17) mit einem rohrförmigen Ansatz (18) aufweist, der ein größeres Axialmaß hat als der rohrförmige Abschnitt (5) zur Aufnahme des Dichtungsrings (7) und in Axialrichtung über den vorderen radialen Endabschnitt (9) der Führungshülse hinausragt, und wobei der rohrförmige Ansatz (18) zur Zentrierung der Führungshülse in der Bohrung des Getriebegehäuses (C) dient.

## Claims

1. Guide tube with incorporated seal for the clutch release bearing of a motor-vehicle gearbox, comprising a tubular sleeve (1) capable of being engaged axially around an input shaft (A) of a gearbox, a tubular end bearing surface (5) capable of forming a seat for a sealing ring (7), of larger diameter than the tubular sleeve (1), and integrally joined to the said sleeve, and a plate for fastening the guide tube to the outer face of the wall of the gearbox casing (C), the said plate consisting of a radial bearing surface (9) integral with the tubular sleeve (1), characterised in that the said radial bearing surface (9) integrally extends, at its front end, the tubular bearing surface (5) for receiving the sealing ring (7), the said sealing ring comprising an armature having an outer tubular bearing surface (17) with a tubular extension (18) of greater axial extent than the said tubular bearing surface (5) for receiving the said sealing ring (7), and extending axially beyond the front-end radial bearing surface (9) of the guide tube, the tubular extension (18) serving for centring the guide tube in the bore of the casing (C)
of the gearbox.

*Fig.1*

*Fig.2*